# EUROPÄISCHE PATENTANMELDUNG

(11) **EP 3 354 433 A1**
(43) Veröffentlichungstag der Anmeldung: **01.08.2018**
(21) Anmeldenummer: 17153855.6
(22) Anmeldetag: 31.01.2017
(51) Int. Cl.: B29B 15/12, B29C 70/50, C08J 5/24, B29D 29/00, B29C 70/20, B29L 31/30, B60R 13/02, B29L 31/34

(54) **VORRICHTUNG MIT FREILAUFENDEN KÜHLWALZEN ZUR HERSTELLUNG EINES FASERVERBUNDWERKSTOFFS IN FORM EINES MIT POLYMER IMPRÄGNIERTEN FASERBANDS, VERFAHREN ZUR HERSTELLUNG DIESES FASERBANDS, EIN IMPRÄGNIERTES FASERBAND UND EIN AUS DEM IMPRÄGNIERTEN FASERBAND HERGESTELLTER MEHRSCHICHTVERBUND**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Vorrichtung mit mindestens einem Paar von freilaufenden Kühlwalzen (11, 21) zur kontinuierlichen Herstellung eines mit Polymer imprägnierten Faserbands, wobei es sich bei den Fasern um Endlosfasern handelt und die Fasern im imprägnierten Faserband unidirektional in Laufrichtung des imprägnierten Faserbands ausgerichtet sind. Vorzugsweise ist dabei mindestens eine der beiden Walzen (11, 21) mit einem Paar von vorzugsweise gleichartigen Dichtringen (24a, 24b) ausgestattet.

## Beschreibung

Gegenstand der vorliegenden Erfindung ist eine Vorrichtung mit mindestens einem Paar von freilaufenden Kühlwalzen zur kontinuierlichen Herstellung eines mit Polymer imprägnierten Faserbands, wobei es sich bei den Fasern um Endlosfasern handelt und die Fasern im imprägnierten Faserband unidirektional in Laufrichtung des imprägnierten Faserbands ausgerichtet sind. Vorzugsweise ist dabei mindestens eine der beiden Walzen mit einem Paar von vorzugsweise gleichartigen Dichtringen ausgestattet.

Gegenstand der vorliegenden Erfindung ist auch ein Verfahren zur kontinuierlichen Herstellung eines mit Polymer imprägnierten Faserbands mit unidirektional in Laufrichtung des imprägnierten Faserbands ausgerichteten Endlosfasern unter Verwendung der vorgenannten Vorrichtung.

Weiterer Gegenstand der vorliegenden Erfindung ist auch ein imprägniertes Faserband, dass mit der erfindungsgemäßen Vorrichtung oder dem erfindungsgemäßen Verfahren hergestellt werden kann, sowie ein Mehrschichtverbund, der aus dem imprägnierten Faserband hergestellt werden kann sowie die Verwendung dieses Mehrschichtverbunds.

Die längste Achse eines Faserbands wird auch Laufrichtung genannt. Unter "Endlosfaser" wird verstanden, dass die Länge der verstärkenden Faser im Wesentlichen der Abmessung des zu verstärkenden imprägnierten Faserbands in der Ausrichtung der Faser entspricht. Unter "unidirektional" im Zusammenhang mit "Faser" wird verstanden, dass die Fasern im imprägnierten Faserband in nur einer Richtung ausgerichtet sind. Die Vorschubrichtung ist die Richtung, in der das Faserband während seiner Herstellung vorwärts bewegt wird. Vorschubrichtung und Laufrichtung sind parallel zueinander, die Vorschubrichtung weist aber durch die Vorwärtsbewegung des Faserbands während seiner Herstellung auch einen Richtungssinn auf.

Der Einsatz von faserverstärkten Materialien hat auf Grund ihrer ausgezeichneten spezifischen Eigenschaften in den letzten Dekaden stetig zugenommen. Insbesondere bei beschleunigten Strukturen werden faserverstärkte Materialien eingesetzt, um ohne Verluste bei der Festigkeit und Steifigkeit des Materials eine Gewichtsreduktion zu ermöglichen und so den Energieverbrauch zu minimieren.

Bei einem faserverstärkten Material, auch Faserverbundwerkstoff oder kurz Verbundwerkstoff genannt, handelt es um einen mindestens zweiphasigen Werkstoff, der aus einem Matrixmaterial besteht, in dem Fasern im Wesentlichen vollständig eingebettet und ummantelt sind. Die Matrix hat eine formgebende Funktion, soll die Fasern vor äußeren Einflüssen schützen und ist notwendig, um Kräfte zwischen den Fasern zu übertragen sowie äußere Lasten einzuleiten. Die Fasern tragen maßgeblich zur mechanischen Leistungsfähigkeit des Werkstoffs bei, wobei in der Industrie häufig Glas-, Carbon-, Polymer-, Basalt-, oder Naturfasern zum Einsatz kommen. Als Matrixmaterial werden - abhängig vom Einsatzzweck - im Allgemeinen duroplastische oder thermoplastische Polymere eingesetzt, vereinzelt auch Elastomere.

Duroplastische Polymere sind bereits in zahlreichen Industrien seit langem etabliert. Ein entscheidender Nachteil ist jedoch die lange Aushärtungszeit, die bei der Verarbeitung zu Bauteilen zu entsprechend langen Zykluszeiten führt. Dies macht duroplastbasierte Verbundwerkstoffe vor allem für Industrieanwendungen mit hohen Stückzahlen unattraktiv. Thermoplastbasierte Verbundwerkstoffe hingegen werden häufig, soweit sie als bereits vollkonsolidierte Halbzeuge vorliegen, z.B. als endlosfaserverstärkte Platten oder Profile, bei der Weiterverarbeitung lediglich aufgeheizt, umgeformt und abgekühlt, was heutzutage in Zykluszeiten deutlich unter einer Minute zu realisieren ist. Darüber hinaus lässt sich die Verarbeitung mit weiteren Prozessschritten wie z.B. dem Hinterspritzen mit Thermoplasten kombinieren, wodurch ein sehr hoher Grad an Automatisierung und Funktionsintegration erreicht werden kann.

Als Verstärkungsmaterial werden im Wesentlichen textile Halbzeuge wie Gewebe, mehrlagige Gelege oder Non-wovens (auch Vliese oder Wirrfasermatten genannt) verwendet. Diese Formen der Faserverstärkung zeichnen sich dadurch aus, dass bereits im textilen Halbzeug die Ausrichtung der Faser - und somit der Kraftpfade im späteren Bauteil - festgelegt ist. Dies ermöglicht zwar die direkte Herstellung eines multidirektional verstärkten Verbundwerkstoffes, hat aber Nachteile hinsichtlich der Flexibilität des Lagenaufbaus, der mechanischen Eigenschaften und der Wirtschaftlichkeit. Bei thermoplastbasierten Systemen werden diese textilen Halbzeuge üblicher Weise unter Druck und Temperatur mit Polymer imprägniert und anschließend als ausgehärtete Platte zugeschnitten und weiterverarbeitet.

Neben diesen bereits etablierten Systemen auf Basis von textilen Halbzeugen gewinnen thermoplastbasierte Tapes, also mit einem thermoplastischen Polymer imprägnierte Faserbänder, zunehmend an Bedeutung. Diese bieten Vorteile in der Wirtschaftlichkeit, da der Prozessschritt der textilen Halbzeugherstellung eingespart werden kann. Diese thermoplastbasierten Tapes eignen sich zur Herstellung von mehrlagigen Aufbauten, insbesondere auch zur Herstellung von multidirektionalen Aufbauten.

Ein Verfahren und eine Vorrichtung zur Herstellung eines unidirektional endlosfaserverstärkten Faserbands ist beispielsweise in der WO 2012 123 302 A1, deren Offenbarung hiermit vollumfänglich in die Beschreibung der vorliegenden Erfindung mit einbezogen wird, beschrieben.

Bei der in der WO 2012 123 302 A1 offenbarten Vorrichtung ist mit dem Bezugszeichen 17 auch eine Abkühleinrichtung vorgesehen, die zwei Kühl-Kalibier-Rollen mit dem Bezugszeichen 35 umfasst.

Solche Kühl-Kalibrier-Rollen können wie im Stand der Technik üblich als zylinderförmige Kalander mit konstanten Spalt ausgeführt werden. Dabei können die Rollen unmittelbar oder mittelbar durch eine Antriebsvorrichtung so angetrieben werden, beispielsweise einen Motor, dass sie auf das zwischen ihnen durchlaufende imprägnierte Faserband eine Kraft in Vorschubrichtung des Bands übertragen.

Eine solche Anordnung von Kühl-Kalibier-Rollen hat den Nachteil, dass die damit hergestellten imprägnierten Faserbänder einen Querschnitt aufweisen, der stark von dem gewünschten Querschnitt eines langgestreckten Rechtecks abweicht. Insbesondere sind diese imprägnierten Faserbänder in der Mitte der langen Seiten des Querschnitts dicker als in den äußeren Bereichen des Querschnitts. Um dies zu verhindern, werden im Stand der Technik beispielsweise Paare von Kühl-Kalibrier-Rollen verwendet, bei denen eine der beiden Rollen, zumeist die untere, an beiden Enden je einen ringförmigen, fest mit der Rolle verbundenen, erhobenen Randbereich aufweist. Die andere der beiden Rollen, zumeist die obere, taucht dann zwischen diese Randbereiche ein. Diese imprägnierten Faserbänder weisen jedoch häufig an den Rändern der langen Seiten des Querschnitts ganz außen Grate auf, die sich senkrecht zu den langen Seiten nach außen erstrecken. Grund dafür ist, dass in die Zwischenräume zwischen den Ringen der einen Rolle und den Stirnseiten der zwischen den Ringen eintauchenden Rolle bei der Verarbeitung eines imprägnierten Faserbands immer Matrixmaterial dieses Faserbands eindringt.

Dies kann umgangen werden, indem die Ringe der unteren Walze lose auf dieser anliegen. Erfindungsgemäß bevorzugt ist dabei ein Spiel zwischen Walze und Ring von 0 bis 200 µm, besonders bevorzugt von 12 bis 56 µm, ganz besonders bevorzugt eine H7/g6 Passung. Diese Ringe können dann seitlich gegen die Stirnflächen der oberen Walze angedrückt werden, so dass die Zwischenräume zwischen den Ringen und den Stirnseiten der oberen Walze verkleinert wird. Dadurch kann kein Material mehr zwischen den Ringen und den Stirnseiten der Walze eindringen, so dass auch keine Grate mehr gebildet werden.

Um ein imprägniertes Faserband zu erhalten, das nur gering von dem gewünschten Querschnitt eines langgestreckten Rechtecks abweicht, müssen die nach dem Stand der Technik hergestellten imprägnierten Faserbänder an den äußeren Enden in Längsrichtung beschnitten werden. Nur so ist es möglich, ein für die Weiterverarbeitung brauchbares imprägniertes Faserband zur Verfügung zu stellen, beispielsweise für die Herstellung von Aufbauten aus mehreren miteinander verbundenen Faserbändern. Die Abweichungen von der Rechteckform führten ansonsten dazu, dass beim Verbinden der Faserbänderlagen blasenförmige Lücken zwischen den Lagen auftreten, wodurch der Zusammenhalt der Lagen und damit der geschwächt würde. Die Grate an den Rändern erschwerten es ansonsten auch, dass das imprägnierte Faserband platzsparend und beschädigungsfrei aufgerollt werden kann.

Nachteilig beim Beschneiden des imprägnierten Faserbands ist aber der Verlust an Material, der insbesondere dann zu Buche schlägt, wenn teure Ausgangsmaterialien wie beispielsweise Polycarbonat als thermoplastische Matrix und Carbonfasern als Fasermaterial verwendet werden.

Polycarbonate haben neben dem hohen Preis gegenüber den üblicherweise eingesetzten thermoplastischen Kunststoffen den weiteren Nachteil, dass sie wenig Veranlagung zum Kriechen aufweisen und somit bei konstanter Spannung zu Rissbildung neigen. Dies ist besonders beim Einsatz in Verbundwerkstoffen, die Endlosfasern enthalten, höchst problematisch; denn Verbundwerkstoffe, die in ihrer Kunststoffmatrix Endlosfasern enthalten, stehen durch die Endlosfasern unter einer konstanten Spannung. Aus diesem Grund spielten Polycarbonate in der Praxis als Kunststoffmatrix für solche Endlosfasern enthaltenden Verbundwerkstoffe bisher nur eine untergeordnete Rolle. Grundsätzlich ist es jedoch wünschenswert, das Einsatzgebiet von Polycarbonaten auch auf die imprägnierten Faserbänder auszuweiten, denn Polycarbonate weisen gegenüber den anderen üblichen thermoplastischen Kunststoffen, wie Polyamid oder Polypropylen, einen geringeren Volumenschwund beim Erstarren auf. Ferner weisen Polycarbonate im Vergleich zu anderen Thermoplasten eine höhere Glasübergangstemperatur Tg, eine höhere Wärmeformbeständigkeiten und eine geringere Wasseraufnahme auf.

Mit Faserbändern mit Polycarbonat als Matrixmaterial ist es darüber hinaus möglich, einen Mehrschichtverbundwerkstoff bereit zu stellen, der eine ästhetisch ansprechende Oberfläche mit geringer Welligkeit mit gleichzeitig guten mechanischen Eigenschaften aufweist. So ein aus Faserbändern mit Polycarbonat als Matrixmaterial aufgebauter Mehrschichtverbundwerkstoff weist eine metallähnliche Haptik, Optik und Akustik auf.

Mit diesen Eigenschaften ist ein solcher Mehrschichtverbundwerkstoff auch als Gehäusematerial für Gehäuse für elektronische Geräte, insbesondere portable elektronische Geräte wie Laptops oder Smartphones, für die Außenbeplankung sowie für Interieurblenden von Automobilen geeignet, da ein solcher Mehrschichtverbundwerkstoff sowohl mechanische Last aufnehmen kann als auch ein hervorragendes äußeres Erscheinungsbild bietet.

Um Polycarbonat der Herstellung von Faserbändern zugänglich zu machen, ist es daher auch eine besondere Sorgfalt beim Abkühlen des imprägnierten Faserbands nötig, die im Stand der Technik nicht gewährleistet ist.

Außerdem weisen die mit der in der WO 2012 123 302 A1 beschriebenen Anordnung hergestellten Faserbänder einen Gehalt von Lufteinschlüssen auf, der ebenfalls die Weiterverarbeitung der Faserbänder stört. Auch hier treten blasenförmige Lücken auf, die in diesem Fall schon den Zusammenhalt der einzelnen Faserbänder beeinträchtigen. Dies schwächt in Folge dann auch den Zusammenhalt von Aufbauten aus mehreren miteinander verbundenen Faserbändern.

Aufgabe der vorliegenden Erfindung ist es, die Nachteile des Stands der Technik zu überwinden.

Insbesondere Aufgabe der vorliegenden Erfindung ist es, eine Vorrichtung zur Verfügung zu stellen, mit der ein imprägniertes Faserband erhalten werden kann, bei dem in den Randbereichen die Dicke des imprägnierten Faserbands nicht oder nur geringfügig von der gewünschten Dicke des Querschnitts abweicht.

Eine nur geringfügige Abweichung von der gewünschten Dicke des imprägnierten Faserbands bedeutet im Sinne der vorliegenden Erfindung, dass die Dicke nicht mehr als maximal 20 %, bevorzugt nicht mehr als maximal 10 %, besonders bevorzugt nicht mehr als maximal 5 %, besonders bevorzugt nicht mehr als maximal 2 % von der gewünschten Dicke des imprägnierten Faserbands abweicht. Dabei soll der Querschnitt des imprägnierten Faserbands nicht oder nur gering von dem gewünschten Querschnitt eines langgestreckten Rechtecks abweichen. Das bedeutet, dass die gewünschte Dicke des Faserbands über seine ganze Breite gleich sein soll.

Ganz insbesondere Aufgabe der vorliegenden Erfindung ist es, eine Vorrichtung zur Verfügung zu stellen, mit der ein imprägniertes Faserband erhalten werden kann, bei dem in den Randbereichen die Dicke des imprägnierten Faserbands nicht oder nur geringfügig größer ist als die gewünschte Dicke des Querschnitts, wobei der Querschnitt des imprägnierten Faserbands nicht oder nur gering von dem gewünschten Querschnitt eines langgestreckten Rechtecks abweichen soll. Das bedeutet, dass die gewünschte Dicke des Faserbands über seine ganze Breite gleich sein soll.

Eine nur geringfügig größere Dicke als die gewünschte Dicke des imprägnierten Faserbands bedeutet im Sinne der vorliegenden Erfindung, dass die Dicke nicht mehr als maximal 20 %, bevorzugt nicht mehr als maximal 10 %, besonders bevorzugt nicht mehr als maximal 5 %, besonders bevorzugt nicht mehr als maximal 2 % größer ist als die gewünschte Dicke des imprägnierten Faserbands.

Unter der Dicke wird im Sinne der vorliegenden Erfindung die Raumdimension mit der kleinsten räumlichen Ausdehnung verstanden, wobei die Dicke sowohl rechtwinklig zur Breite als auch zur Laufrichtung des imprägnierten Faserbands ausgerichtet ist.

Unter Randbereich wird im Sinne der vorliegenden Erfindung ein Bereich des imprägnierten Faserbands bezeichnet, der auf beiden Seiten die in Laufrichtung sowohl jeweils die äußere Kante selbst des imprägnierten Faserbands umfasst als auch mindestens die Bereiche des imprägnierten Faserbands umfasst, die bis zu 1 %, bevorzugt bis zu 2 %, besonders bevorzugt bis zu 5 %, ganz besonders bevorzugt bis zu 10 % der Breite des imprägnierten Faserbands von der jeweils nächsten äußeren Kante des imprägnierten Faserbands entfernt sind.

Außerdem soll das erhaltene imprägnierte Faserband maximal 5 Vol.-%, bevorzugt 2 Vol.-%, besonders bevorzugt 1 Vol.-% Lufteinschlüsse enthalten.

Auch ist es Aufgabe der vorliegenden Erfindung, eine Vorrichtung zur Verfügung zu stellen, mit der imprägnierte Faserbänder mit Polycarbonat als Matrixmaterial hergestellt werden können. Diese imprägnierten Faserbänder mit Polycarbonat als Matrixmaterial sollen dazu geeignet sein, dass Mehrschichtverbundwerkstoffe mit einer metallähnliche Haptik, Optik, Akustik und einem hervorragenden äußeren Erscheinungsbild sowie der Fähigkeit, mechanische Last aufnehmen zu können, aus ihnen gefertigt werden können. Solche Mehrschichtverbundwerkstoffe sind dann als Gehäusematerial für Gehäuse für elektronische Geräte, insbesondere portable elektronische Geräte wie Laptops oder Smartphones, für die Außenbeplankung sowie für Interieurblenden von Automobilen geeignet.

Gelöst wird die Aufgabe durch die Vorrichtung gemäß vorliegendem Hauptanspruch. Die erfindungsgemäße Vorrichtung ist dadurch gekennzeichnet, dass sie mindestens ein Paar von freilaufenden Kühlwalzen aufweist.

Im Sinne der vorliegenden Erfindung bedeutet "freilaufende Kühlwalzen", dass diese Kühlwalzen weder unmittelbar noch mittelbar durch eine Antriebsvorrichtung derart angetrieben werden, so dass sie auf das zwischen ihnen durchlaufende imprägnierte Faserband keine Kraft in Vorschubrichtung des Bands übertragen. Die Kühlwalzen weisen somit keine Welle auf, mit der sie angetrieben werden könnten, sondern nur jeweils eine Drehachse, nachfolgend auch kurz "Achse" oder in der Mehrzahl "Achsen" genannt, auf der sie sich in Umfangsrichtung bewegen, also drehen, können. Die Achsen sind so reibungsfrei wie technisch aber mit wirtschaftlich vertretbaren Aufwand möglich gelagert, die Drehbewegung somit so reibungsfrei wie technisch aber mit wirtschaftlich vertretbaren Aufwand möglich gestaltet. Diese reibungsarme Lagerung befähigt die Walzen zum freien Laufen.

Zwar können die Kühlwalzen durch das zwischen ihnen durchlaufende imprägnierte Faserband angetrieben werden, jedoch ist dies im Sinne der vorliegenden Erfindung nicht als "angetrieben" im Zusammenhang mit "Kühlwalze", "Kühlwalzen", zu verstehen. Die "Kühlwalzen" werden nachfolgend auch kurz "Walzen" oder in der Einzahl "Walze" genannt.

Die Walzen eines Paars von Kühlwalzen sind dabei sind erfindungsgemäß bevorzugt so angeordnet, dass die Drehachsen der Walzen parallel zueinander stehen. Alle Angaben zur räumlichen Anordnung der Walzen in dieser Schrift gehen von der Annahme aus, dass die Walzen eines Paars von Walzen übereinander angeordnet sind; diese Anordnung ist bevorzugt. Die Walzen können dabei genau senkrecht übereinander angeordnet oder um eine Winkel W in Umfangsrichtung versetzt sein. Dieser Winkel kann von 0° (Walzen genau senkrecht übereinander) bis 90° (Walzen horizontal nebeneinander) betragen. Bevorzugt beträgt dieser Winkel zwischen 0° und 15°, besonders bevorzugt 0° bis 3°, ganz besonders bevorzugt 0°. Wird der Versatz zu groß gewählt, "schmiegt" sich das imprägnierte Faserband stärker an die in Vorschubrichtung vordere Walze an, wodurch die dieser Walze zugewandte Oberfläche des imprägnierten Faserbands stärker abgekühlt wird als die dieser Walze abgewandte Seite. Das führt zu Unterschieden zwischen den beiden Oberflächen des imprägnierten Faserbands. Dies ist unerwünscht, da dies zu Schwierigkeiten bei der Weiterverarbeitung des imprägnierten Faserbands führen kann und auch die ästhetische Qualität der Oberfläche des imprägnierten Faserbands verschlechtern kann. Es ist aber auch möglich, dass die Walzen senkrecht nebeneinander oder in jeder anderen räumlichen Ausrichtung zwischen der horizontalen und senkrechten Ausrichtung zueinander ausgerichtet sind, solange gewährleistet ist, dass die Drehachsen der Walzen parallel zueinander stehen. So kann das imprägnierte Faserband beispielsweise auch senkrecht von oben nach unten durch die Walzen durchlaufen, wobei die Walzen horizontal nebeneinander angeordnet sind. In der nachfolgenden Beschreibung der Erfindung wird sprachlich von dem bevorzugten Fall ausgegangen, dass die Walzen horizontal übereinander angeordnet sind, wenn es darum geht, wie die Walzen räumlich angeordnet sind, beispielsweise zueinander oder im Verhältnis zur Umgebung. Sind die Walzen senkrecht nebeneinander oder in einer anderen räumlichen Ausrichtung zwischen der horizontalen und senkrechten Ausrichtung zueinander ausgerichtet, so sind die räumlichen Bezüge entsprechend der räumlichen Ausrichtung gedanklich anzupassen, was für einen durchschnittlichen Fachmann keine Schwierigkeit darstellt.

Die Länge einer der beiden Walzen ist kürzer als die der anderen, wobei es sich bei der kürzeren Walze vorzugsweise um die obere handelt. Die Länge der kürzeren Walze beträgt vorzugsweise 10 bis 90, bevorzugt 15 bis 85 % der Länge der längeren Walze. Die Länge der längeren Walze überlappt die Länge der kürzeren Walze vollständig, wobei die kürzere Walze aber nicht mittig zur längeren Walz angeordnet sein muss, aber kann.

Die Durchmesser der Walzen sind vorzugsweise gleich. Jedoch können die Walzen auch unterschiedliche Durchmesser haben. In diesem Fall beträgt der Durchmesser der dünneren Walze zwischen 50 und 99 %, bevorzugt 80 bis 90 % des Durchmessers der dickeren Walze. Vorzugsweise sind die Durchmesser jedoch gleich. Wird der Dickenunterschied zu groß gewählt, übt die dünnere Walze einen größeren Druck auf die ihr zugewandte Seite des imprägnierten Faserbands aus als dies die dickere Walze auf die der dickeren Walze zugewandte Seite tut. Das führt zu Unterschieden zwischen den beiden Oberflächen des imprägnierten Faserbands. Dies ist unerwünscht, da dies zu Schwierigkeiten bei der Weiterverarbeitung des imprägnierten Faserbands führen kann und auch die ästhetische Qualität der Oberfläche des imprägnierten Faserbands verschlechtern kann.

Im Sinne der vorliegenden Erfindung handelt es sich bei den Walzen um die zylindrischen Körper, deren einander zugewandte Teile der Oberflächen sich bei paralleler Anordnung ihrer Achsen am nächsten stehen. Bei den Achsen der Walzen kann es sich beispielsweise auch um zylindrische Körper handeln, jedoch sind die einander zugewandten Teile der Achsen weiter voneinander entfernt als die einander zugewandten Teile der Walzen. Auch kann eine oder beide der Walzen jeweils auf einer Rolle angeordnet sein, wobei es sich bei dieser Rolle auch um einen zylindrischen Körper handelt. Eine Walze ist mit ihrer Achse - und soweit vorhanden mit ihrer Rolle - koaxial angeordnet.

Mindestens eine der beiden Walzen eines Paars von Kühlwalzen ist dabei so gelagert, dass der Abstand zwischen den beiden Walzen, also der Spalt, veränderlich ist, wobei die Achsen der Walzen und somit die Walzen selbst bei der Veränderung des Spalts parallel bleiben. Diese kann beispielsweise durch eine in vertikaler Richtung bewegliche Lagerung mindestens einer der Walzen erreicht werden; mindestens eine der beiden Achsen ist also in Richtung einer gedachten Achse, die rechtwinklig die Achsen beider Walzen schneidet, beweglich angeordnet. Vorzugsweise ist nur eine der Walzen so gelagert, dass der Spalt veränderlich ist. Sind die Walzen übereinander angeordnet, ist vorzugsweise nur die obere Walze so gelagert, dass der Spalt veränderlich ist.

Wenn außer der Gewichtskraft keine weiteren Kräfte an der beweglich gelagerten Walze angreifen, befindet sie sich in der 0-Position. Ausgehend von dieser 0-Position kann der Spalt nur größer oder gleich dem Spalt in der 0-Position werden. Vorzugsweise berühren sich in der 0-Position die Walzen nicht, das heißt, es ist bereits ein Spalt voreingestellt. Vorzugsweise ist dieser voreingestellte Spalt aber kleiner als die Dicke des imprägnierten Faserbands, wobei der Spalt bei einer Temperatur der Vorrichtung von 15 bis 25 °C - beispielsweise bei Nichtbetrieb der Vorrichtung - eine Ausdehnung von 220 bis 315 µm, bevorzugt von 225 bis 265 µm aufweist. Bei einer Betriebstemperatur der Vorrichtung von 70 bis 110 °C, bevorzugt 85 bis 95 °C hat der Spalt eine Ausdehnung von 5 bis 100 µm, bevorzugt 10 bis 50 µm.

Die bewegliche gelagerte Walze besitzt gegenüber Veränderungen ihrer Lage aus der 0-Position eine Rückstellkraft. Diese wirkt einer Vergrößerung des Spalts entgegen. Diese Rückstellkraft kann die Gewichtskraft der beweglich gelagerten Walze sein. Zusätzlich oder - je nach Lage des Paars von Walzen im Raum - alternativ kann über Gewichtskraft der Walze hinaus eine zusätzliche Kraft der Veränderung der Lage der Walze in vertikaler Richtung entgegenstellt sein. So kann beispielsweise die Rückstellkraft der Walze durch eine Rückstellvorrichtung mit Hilfe von pneumatischem Druck, wiederum beispielweise durch pneumatische oder hydraulische Zylinder, Federkraft, zusätzlichen Gewichten oder auf andere technisch sinnvolle Weise vergrößert werden. Vorzugsweise wirken der pneumatische Druck, die Federkraft, die zusätzliche Gewichtskraft oder die auf andere Weise verursachte Kraft über die Achse der Walze auf diese. Die zusätzliche Kraft wirkt dabei radial von der Achse der Walze in Richtung Spalt. Befindet sich im Spalt zwischen den Walzen ein Material, das den Spalt vergrößert, so wirkt die zusätzliche Kraft auf das Material und somit der Vergrößerung des Spalts entgegen. Es wird jedoch durch die zusätzliche Kraft keine Kraft in Umfangsrichtung der Walze oder tangential zur Walze ausgeübt. Die Gesamtauslenkung der beweglich gelagerten Walze beträgt dabei maximal 200 %, bevorzugt 150 %, besonders bevorzugt 120 %, ganz besonders bevorzugt 110 % der gewünschten Dicke des imprägnierten Faserbands.

Befindet sich in dem Spalt ein imprägniertes Faserband, insbesondere läuft ein imprägniertes Faserband durch die erfindungsgemäßen Walzen hindurch, so wird es im Spalt zusammengedrückt, also in seiner Dicke verringert. Da das imprägnierte Faserband mit seiner nacheinander mit seiner gesamten Länge zwischen den Walzen hindurch läuft, geschieht diese Verringerung der Dicke im Spalt auf der gesamten Länge des imprägnierten Faserbands. Insbesondere wird die Dicke des imprägnierten Faserbands durch diesen Vorgang vereinheitlicht, das heißt der Unterschied zwischen der größten Dicke des imprägnierten Faserbands und der kleinsten Dicke des imprägnierten Faserbands verringert sich.

Insbesondere wird durch die erfindungsgemäße Anordnung der Walzen erreicht, dass in den Randbereichen die Dicke des imprägnierten Faserbands nicht oder nur geringfügig von der gewünschte Dicke des imprägnierten Faserbands abweicht. Vorzugsweise weicht in den Randbereichen des imprägnierten Faserbands die Dicke nicht mehr als maximal 20 %, bevorzugt nicht mehr als maximal 10 %, besonders bevorzugt nicht mehr als maximal 5 %, besonders bevorzugt nicht mehr als maximal 2 % von der gewünschte Dicke des imprägnierten Faserbands ab. Dabei weicht der Querschnitt des imprägnierten Faserbands nicht oder nur gering von dem gewünschten Querschnitt eines langgestreckten Rechtecks ab; das bedeutet, dass die gewünschte Dicke des imprägnierten Faserbands über seine ganze Breite gleich ist.

Ganz insbesondere wird durch die erfindungsgemäße Anordnung der Walzen erreicht, dass in den Randbereichen die Dicke des imprägnierten Faserbands nicht oder nur geringfügig dicker ist als die gewünschte Dicke des imprägnierten Faserbands. Vorzugsweise ist in den Randbereichen des imprägnierten Faserbands die Dicke nicht mehr als maximal 20 %, bevorzugt nicht mehr als maximal 10 %, besonders bevorzugt nicht mehr als maximal 5 %, besonders bevorzugt nicht mehr als maximal 2 % größer ist als die gewünschte Dicke des imprägnierten Faserbands. Dabei weicht der Querschnitt des imprägnierten Faserbands nicht oder nur gering von dem gewünschten Querschnitt eines langgestreckten Rechtecks ab; das bedeutet, dass die gewünschte Dicke des imprägnierten Faserbands über seine ganze Breite gleich ist.

Darüber hinaus wird die Anzahl Lufteinschlüsse und das Volumen der eingeschlossenen Luft deutlich verringert, und zwar auf einen Gehalt von weniger als 1 Vol.-%, und erreicht, dass sich die Fasern im umgebenden Thermoplasten gleichmäßiger verteilen.

Vorzugsweise weist mindestens eine der Walzen eines Paars von Kühlwalzen zwei vorzugsweise gleichartige Dichtringe auf, die koaxial zu der betreffenden Walze auf dieser angeordnet sind, wobei die Dichtringe zueinander spiegelsymmetrisch ausgestaltet sein können. Wie dem Fachmann aus üblichen Spielpassungen bekannt, ist der lichte Innendurchmesser dieser Dichtringe dabei geringfügig größer als der Außendurchmesser der Walze, so dass die Dichtringe sowohl in Umfangsrichtung auf der Walze drehbar als auch in axialer Richtung verschiebbar sind, ohne dass die Dichtringe beim Drehen der Walze eine Unwucht bildeten oder in Schwingung gerieten. Wie bereits weiter oben beschrieben, ist dabei erfindungsgemäß bevorzugt ein Spiel zwischen Walze und Ring von 0 bis 200 µm, besonders bevorzugt von 12 bis 56 µm, ganz besonders bevorzugt eine H7/g6 Passung. Die Dichtringe sind dabei vorzugsweise auf der Walze eines Paars von Walzen angeordnet, die nicht in vertikaler Richtung beweglich gelagert ist.

Weist eine Walze diese zwei Dichtringe auf, so weisen die beiden Walzen verschiedene Längen auf und die Dichtringe sind auf der längeren der beiden Walzen angeordnet. Die kürzere der beiden Walzen ist dann so angeordnet, dass sie teilweise zwischen den beiden Dichtringen eintaucht, wobei die Länge der Walze geringfügig geringer ist als der Abstand der Dichtringe zueinander. In der Praxis wird der Abstand der beiden Dichtringe zueinander der Länge der kürzeren Walze angepasst. Die Dicke der Dichtringe ist vorzugsweise mindestens so groß wie die maximale Gesamtauslenkung der beweglich gelagerten Walze. Dabei wird unter der Dicke eines Dichtrings hier die Differenz zwischen dem Außenradius und dem Innenradius eines Dichtrings verstanden. Die Dichtringe und die Walzen sind in axialer Richtung zueinander vorzugsweise zu einer gedachten Achse, die rechtwinklig die Achsen beider Walzen schneidet, symmetrisch angeordnet. Um der beweglich gelagerten Walze das Eintauchen zwischen die Dichtringe zu erleichtern, weisen die Dichtringe an den Seiten, die der eintauchenden Walze zugewandt sind, vorzugsweise eine Fase auf. Der Winkel F der Fase beträgt vorzugsweise 5 bis 45°, bevorzugt 15 bis 30°. Diese Fase befindet sich dabei nur an den äußeren Rändern der Dichtringe.

Vorzugsweise ist zwischen den Dichtringen ein Abstandshalter angeordnet. Dieser Abstandshalter kann in einem sehr einfachen Fall beispielsweise in Form eines rechteckigen Blechs ausgestaltet sein, wobei die Breite des Blechs den Abstand zwischen den Dichtringen bestimmt. Dieser Abstandshalter ist bezogen auf die Achse der Walze, auf der die Dichtringe angeordnet sind, vorzugsweise um 120 bis 240°, bevorzugt 150 bis 210°, besonders bevorzugt von 175 bis 185°, insbesondere um 180° gegenüber der anderen Walze versetzt. Auf diese Weise wird verhindert, dass die Dichtringe auf der Walze bei deren Drehung verkanten. Der Abstandshalter berührt nicht die Walze. Es kann aber auch auf die Abstandshalter verzichtet werden.

Vorzugsweise ist jeder der beiden Dichtringe außerdem je eine außerhalb der Ringe befindliche Abstandshaltevorrichtung unmittelbar benachbart. Diese verhindert, dass sich ein Dichtring auf der Walze axial nach Außen bewegen kann. Die Abstandshaltevorrichtung kann beispielsweise als ein an einer Stange beweglich gelagertes Rädchen ausgebildet sein. Durch die Abstandshaltevorrichtung wird der Abstand eines Dichtrings vom äußeren Ende der Walze bestimmt. Alternativ kann eine Abstandshaltevorrichtung oder können beide Abstandshaltevorrichtungen auch jeweils durch eine Andrückvorrichtung ersetzt werden.

Die beiden Walzen bilden so zusammen mit den beiden Dichtringen eine Öffnung mit rechteckigem Querschnitt.

Insbesondere wird durch die erfindungsgemäße Anordnung der Dichtringe erreicht, dass die Breite des imprägnierten Faserbands an keiner Stelle um mehr als 2 %, bevorzugt an keiner Stelle um mehr als 1 %, besonders bevorzugt an keiner Stelle um mehr als 0,5 %, ganz besonders bevorzugt an keiner Stelle um mehr als 0,2 %, insbesondere an keiner Stelle mehr als 0,1 % von der gewünschten Breite des imprägnierten Faserbands abweicht.

Im Rahmen der vorliegenden Erfindung hat ein imprägniertes Faserband eine Matrix, die zu mindestens 50 Gew.-%, bevorzugt mindestens 70 Gew.-%, besonders bevorzugt zu mindestens 90 Gew.-%, aus einem oder mehreren Thermoplasten besteht. Dabei ist der Thermoplast bevorzugt ausgewählt aus ein oder mehreren der Reihe umfassend Polycarbonat, Polyamid, Polyethylen, Polypropylen, Polyphenylensulfon, Polyetherimid, einem Polyetherketon wie Polyetheretherketon, Polyetherketonketon, Polyetheretheretherketon, Polyetheretherketonketon, Poly(etherketon-etherketonketon), und thermoplastisches Polyurethan. Besonders bevorzugt ist der Thermoplast Polycarbonat.

Zusätzlich kann das Matrixmaterial bis zu 50,0 Gew.-%, bevorzugt bis zu 30 Gew.-%, besonders bevorzugt bis zu 10 Gew.-% übliche Additive enthalten.

Diese Gruppe umfasst Flammschutzmittel, Antitropfmittel, Thermostabilisatoren, Entformungsmittel, Antioxidantien, UV-Absorber, IR-Absorber, Antistatika, optische Aufheller, Lichtstreumittel, Farbmittel wie Pigmente, auch anorganischen Pigmente, Ruß und/oder Farbstoffe, und anorganische Füllstoffe in den für Polycarbonat üblichen Mengen. Diese Additive können einzeln oder auch im Gemisch zugesetzt werden.

Solche Additive, wie sie üblicherweise bei Polycarbonaten zugesetzt werden, sind beispielsweise in EP-A 0 839 623, WO-A 96/15102, EP-A 0 500 496 oder "Plastics Additives Handbook", Hans Zweifel, 5th Edition 2000, Hanser Verlag, München beschrieben.

Wenn von Polycarbonat die Rede ist, so sind damit auch Mischungen verschiedener Polycarbonate gemeint. Ferner wird Polycarbonat hier als Oberbegriff verwendet und umfasst damit sowohl Homopolycarbonate als auch Copolycarbonate. Die Polycarbonate können ferner in bekannter Weise linear oder verzweigt sein.

Bevorzugt besteht das Polycarbonat zu 70 Gew.-%, bevorzugt zu 80 Gew.-%, besonders bevorzugt zu 90 Gew.-% oder im Wesentlichen, insbesondere zu 100 Gew.-%, aus einem linearen Polycarbonat.

Die Herstellung der Polycarbonate kann in bekannter Weise aus Diphenolen, Kohlensäurederivaten, gegebenenfalls Kettenabbrechern und Verzweigern erfolgen. Einzelheiten der Herstellung von Polycarbonaten sind dem Fachmann seit mindestens etwa 40 Jahren gut bekannt. Beispielhaft sei hier auf Schnell, Chemistry and Physics of Polycarbonates, Polymer Reviews, Volume 9, Interscience Publishers, New York, London, Sydney 1964, auf D. Freitag, U. Grigo, P.R. Müller, H. Nouvertne, BAYER AG, Polycarbonates in Encyclopedia of Polymer Science and Engineering, Volume 11, Second Edition, 1988, Seiten 648-718 und schließlich auf U. Grigo, K. Kirchner und P.R. Müller Polycarbonate in BeckerBraun, Kunststoff-Handbuch, Band 31, Polycarbonate, Polyacetale, Polyester, Celluloseester, Carl Hanser Verlag München, Wien 1992, Seiten 117-299 verwiesen.

Die Herstellung aromatischer Polycarbonate erfolgt z.B. durch Umsetzung von Diphenolen mit Kohlensäurehalogeniden, vorzugsweise Phosgen, und oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Diphenolen mit beispielsweise Diphenylcarbonat möglich. Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Vorzugsweise werden bei den Diphenolen auf der Basis von Phthalimiden, wie beispielsweise 2-Aralkyl-3,3'-Bis-(4-hydroxyphenyl)-phthalimide oder 2-Aryl-3,3 '-Bis-(4-hydroxyphenyl)-phthalimide wie 2-Phenyl-3,3'-Bis-(4-hydroxphenyl)-phthalimid, 2-Alkyl-3,3'-Bis-(4-hydroxyphenyl)-phthalimide, wie 2-Butyl-3,3'-Bis-(4-hydroxyphenyl)-phthalimide, 2-Propyl-3,3'-Bis-(4-hydroxyphenyl)-phthalimide, 2-Ethyl-3,3'-Bis-(4-hydroxyphenyl)-phthalimide oder 2-Methyl-3,3`-Bis-(4-hydroxyphenyl)-phthalimide sowie Diphenolen auf der Basis von am Stickstoff substituierten Isatinen wie 3,3-Bis(4-hydroxyphenyl)-1-phenyl-1H-indol-2-on oder 2,2-Bis(4-hydroxyphenyl)-1-phenyl-1H-indol-3-on eingesetzt.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1 -Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1 -Bis-(4-hydroxyphenyl)-cyclohexan, 1,1 -Bis-(4-hydroxyphenyl)-3,3,5-trimethylcyclohexan und Dimethyl-Bisphenol A.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie H. Schnell, Chemistry and Physics of Polycarbonates, Interscience Publishers, New York 1964 sowie in JP-A 620391986, JP-A 620401986 und JP-A 1055501986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat. Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol, sowie deren Mischungen.

Bevorzugte Kettenabbrecher sind die Phenole, welche ein- oder mehrfach mit C1- bis C30-Alkylresten, linear oder verzweigt, bevorzugt unsubstituiert, oder mit tert-Butyl substituiert sind. Besonders bevorzugte Kettenabbrecher sind Phenol, Cumylphenol undoder p-tert-Butylphenol. Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 3,00 Mol-%, bezogen auf Mole an jeweils eingesetzten Diphenolen. Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3, 3, 5-trimethylcyclohexan.

Des Weiteren können auch Copolycarbonate Verwendung finden. Zur Herstellung dieser Copolycarbonate können 1 Gew.-% bis 25 Gew.-%, vorzugsweise 2,5 Gew.-% bis 25 Gew.-%, besonders bevorzugt 2,5 Gew.-% bis 10 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3 419 634, US-PS 3 189 662, EP 0 122 535, US 5 227 449) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Die Polycarbonate können alleine oder als Mischung von Polycarbonaten vorliegen. Es ist auch möglich das Polycarbonat oder die Mischung von Polycarbonaten gemeinsam mit einem oder mehreren von Polycarbonat verschiedenen Kunststoffen als Blendpartner einzusetzen.

Als Blendpartner lassen sich Polyamide, Polyester, insbesondere Polybutylenterephthalat und Polyethylenterephthalat, Polylactid, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere und Polyvinylchlorid einsetzen.

Erfindungsgemäß geeignete Polyamide sind ebenfalls bekannt oder nach literaturbekannten Verfahren herstellbar.

Erfindungsgemäß geeignete Polyamide sind bekannte Homopolyamide, Copolyamide und Mischungen dieser Polyamide. Es können dies teilkristalline und/oder amorphe Polyamide sein. Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylhexamethylendiamin und/oder 2,4,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7 bis 12 Kohlenstoffatomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethyl-hexamethylendiamin, m- und/oder p-Xylylendiamin, Bis-(4-aminocyclohexyl)-methan, Bis-(4-aminocyclohexyl)-propan, 3,3'-Dimethyl-4,4'-diamino-dicyclohexyl-methan, 3-Aminomethyl-3,5,5-trimethylcyclohexylamin, 2,5-und/oder 2,6-Bis-(aminomethyl)-norbornan und/oder 1,4-Diaminomethylcyclohexan mit Dicarbonsäuren wie Oxalsäure, Adipinsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomere erhalten wer-den, sind geeignet, ferner Copolymere, die unter Zusatz von Aminocarbonsäuren wie e-Aminocapronsäure, w-Aminoundecansäure oder w-Aminolaurinsäure oder ihren Lactamen, hergestellt werden.

Besonders geeignete amorphe Polyamide sind die Polyamide hergestellt aus Isoph-thalsäure, Hexamethylendiamin und weiteren Diaminen wie 4,4-Diaminodicyclo-hexylmethan, Isophorondiamin, 2,2,4- und/oder 2,4,4-Trimethylhexa-methylendi-amin, 2,5- und/oder 2,6-Bis-(aminomethyl)-norbornen; oder aus Isophthalsäure, 4,4'-Diamino-dicyclohexyhnethan und ε-Caprolactam; oder aus Isophthalsäure, 3,3'-Di-methyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der Stellungsisomeren Diamindicyclohexalmethane eingesetzt werden, die sich zusammensetzen aus
70 bis 99 mol-% des 4,4'-Diamino-Isomeren,
1 bis 30 mol-% des 2,4'-Diamino-Isomeren und
0 bis 2 mol-% des 2,2'-Diamino-Isomeren,
gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Erfindungsgemäß geeignete thermoplastische Polyurethane sind ebenfalls bekannt oder nach literaturbekannten Verfahren herstellbar.

Eine Übersicht über die Herstellung, Eigenschaften und Anwendungen von thermoplastischem Polyurethanen (TPU) ist z.B. im Kunststoff Handbuch [G. Becker, D. Braun], Band 7 "Polyurethane", München, Wien, Carl Hanser Verlag, 1983, gegeben.

TPU werden zumeist aus linearen Polyolen (Makrodiolen), wie Polyester-, Polyether- oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Die eingesetzten thermoplastischen Polyurethane sind Reaktionsprodukte aus
I) organischen Diisocyanaten
II) Polyolen
III) Kettenverlängerern.

Als Diisocyanate (I) können aromatische, aliphatische, araliphatische, heterocyclische und cycloaliphatische Diisocyanate oder Gemische dieser Diisocyanate verwendet werden (vgl. HOUBEN-WEYL "Methoden der organischen Chemie", Band E20 "Makromolekulare Stoffe", Georg Thieme Verlag, Stuttgart, New York 1987, S. 1587-1593 oder Justus Liebigs Annalen der Chemie, 562, Seiten 75 bis 136).

Im Einzelnen seien beispielhaft genannt: aliphatische Diisocyanate, wie Hexamethylendi-isocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexan-diisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entspre-chenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethan-diisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiiso-cyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, Dicyclohexyl-methandiisocyanat, Diphenylmethandiisocyanat-Isomerengemische mit einem 4,4'-Diphenyl-methandiiocyanatgehalt von >96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenyl-poly-methylen-polyisocyanaten.

Zerewitinoff-aktive Polyole (II) sind solche mit im Mittel mindestens 1,8 bis höchstens 3,0 zerewitinoff-aktiven Wasserstoffatomen und einem zahlenmittleren Molekulargewicht M̅ₙ von 500 bis 10000 g/mol, vorzugsweise 500 bis 6000 g/mol.

Eingeschlossen sind neben Aminogruppen, Thiolgruppen oder Carboxylgruppen aufweisenden Verbindungen insbesondere zwei bis drei, bevorzugt zwei Hydroxylgruppen aufweisende Verbindungen, speziell solche mit zahlenmittleren Molekulargewichten Mₙ von 500 bis 10000 g/mol, besonders bevorzugt solche mit einem zahlenmittleren Molekulargewicht M̅ₙ von 500 bis 6000 g/mol; z.B. Hydroxylgruppen aufweisende Polyester, Polyether, Polycarbonate und Polyesteramide oder Gemische aus diesen.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Poly-merisationsprodukte des Tetrahydrofurans. Es können auch trifunktionelle Polyether in Anteilen von 0 bis 30 Gew.-% bezogen auf die bifunktionellen Polyether eingesetzt werden, jedoch höchstens in solcher Menge, dass ein noch thermoplastisch verarbeitbares Produkt entsteht. Die im Wesentlichen linearen Polyether-Diole besitzen vorzugsweise zahlenmittlere Molekulargewichte M̅ₙ von 500 bis 10000 g/mol, besonders bevorzugt 500 bis 6000 g/mol. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z.B. Ethylenglykol, Diethylenglykol, 1,4-Butandiol, 1,5-Pentandiol, 1,6 Hexandiol, 1,10-Decandiol, 2,2-Dimethyl-1,3-propandiol, 1,3-Propandiol oder Di-propylenglykol. Je nach den gewünschten Eigenschaften können die mehrwertigen Alkohole allein oder in Mischung untereinander verwendet werden. Geeignet sind ferner Ester der Koh-lensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren wie ω-Hydroxycapronsäure oder Polymerisationsprodukte von Lactonen, z.B. gegebenenfalls substituierten ω-Caprolactonen. Als Polyester-Diole vorzugsweise verwendet werden Ethandiol-polyadipate, 1,4-Butandiolpolyadipate, Ethandiol-1,4-butandiolpolyadipate, 1,6-Hexandiol-neopentylglykolpolyadipate, 1,6-Hexandiol-1,4-butandiolpolyadipate und Polycaprolactone. Die Polyester-Diole besitzen zahlenmittleren Molekulargewichte M̅ₙ von 500 bis 10000 g/mol, besonders bevorzugt 600 bis 6000 g/mol und können einzeln oder in Form von Mischungen untereinander zur Anwendung kommen.

Zerewitinoff-aktive Polyole (III) sind sogenannte Kettenverlängerungsmittel und besitzen im Mittel 1,8 bis 3,0 zerewitinoff-aktive Wasserstoffatome und haben ein zahlenmittleres Molekulargewicht M̅ₙ von 60 bis 500 g/mol. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden Diole oder Diamine mit einem Molekulargewicht von 60 bis 495 g/mol eingesetzt, vorzugsweise aliphatische Diole mit 2 bis 14 Kohlenstoffatomen eingesetzt, wie z.B. Ethandiol, 1,2-Propandiol, 1,3-Propandiol, 1,4-Butandiol, 2,3-Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bisethylenglykol oder Terephthalsäure-bis-1,4-butandiol, Hydroxy-alkylenether des Hydrochinons, z.B. 1,4-Di(β-hydroxyethyl)-hydrochinon, ethoxylierte Bisphenole, z.B. 1,4-Di(β -hydroxyethyl)-bisphenol A, (cyclo)aliphatische Diamine, wie Iso-phorondiamin, Ethylendiamin, 1,2-Propylendiamin, 1,3-Propylendiamin, N Methyl-propylen-1,3-diamin, N,N'-Dimethylethylendiamin und aromatische Diamine, wie 2,4-Toluylendiamin, 2,6-Toluylendiamin, 3,5-Diethyl-2,4 toluylendiamin oder 3,5 Diethyl-2,6-toluylendiamin oder primäre mono-, di-, tri-oder tetraalkylsubstituierte 4,4'-Diaminodiphenylmethane. Besonders bevorzugt werden als Kettenverlängerer Ethandiol, 1,4-Butandiol, 1,6-Hexandiol, 1,4-Di(β-hydroxyethyl)-hydrochinon oder 1,4 Di(β-hydroxyethyl)-bisphenol A verwendet. Es können auch Gemische der oben genannten Kettenverlängerer eingesetzt werden. Daneben können auch kleinere Mengen an Triolen zugesetzt werden.

Gegenüber Isocyanaten mono funktionelle Verbindungen können in Anteilen bis zu 2 Gew.-%, bezogen auf thermoplastisches Polyurethan, als sogenannte Kettenabbrecher oder Entformungshilfen eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylen-glykolmonomethylether.

Die relativen Mengen der Verbindungen (II) und (III) werden bevorzugt so gewählt, dass das Verhältnis der Summe der Isocyanatgruppen in (I) zu der Summe der zerewitinoffaktiven Wasserstoffatome in (II) und (III) 0,85:1 bis 1,2:1 beträgt, bevorzugt 0,95:1 bis 1,1:1.

Die erfindungsgemäß eingesetzten, thermoplastischen Polyurethanelastomere (TPU) können als Hilfs- und Zusatzstoffe bis zu maximal 20 Gew.-%, bezogen auf die Gesamtmenge an TPU, der üblichen Hilfs- und Zusatzstoffe enthalten. Typische Hilfs- und Zusatzstoffe sind Katalysatoren, Pigmente, Farbstoffe, Flammschutzmittel, Stabilisatoren gegen Alterungs- und Witterungseinflüsse, Weichmacher, Gleit- und Entformungsmittel, fungistatisch und bakteriostatisch wirkende Substanzen sowie Füllstoffe und deren Mischungen.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkyl-salze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den TPU beträgt in der Regel etwa 0 bis 5 Gew.-%, bevorzugt 0 bis 2 Gew.-%, bezogen auf die Gesamtmenge an TPU.

Beispiele für weitere Zusatzstoffe sind Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Auch andere Elastomere wie Kautschuk, Ethylen/Vinylacetatcopolymere, Styrol/Butadiencopolymere sowie andere TPU können verwendet werden.

Weiterhin zur Einarbeitung geeignet sind handelsübliche Weichmacher wie Phosphate, Phthalate, Adipate, Sebacate und Alkylsulfonsäureester.

Erfindungsgemäß geeignetes Polyethylen ist ebenfalls bekannt oder nach literaturbekannten Verfahren herstellbar. Bei dem Polyethylen kann es sich sowohl um PE-HD (HDPE), PE-LD (LDPE), PE-LLD (LLDPE), PE-HMW, als auch um PE-UHMW handeln.

Auch das erfindungsgemäß geeignete Polypropylen, Polyphenylensulfon, Polyetherimid, und Polyetherketon ist ebenfalls bekannt oder nach literaturbekannten Verfahren herstellbar.

Allgemein kann es sinnvoll sein, dem Thermoplasten, der für die Matrix verwendet wird, Thermostabilisatoren und Fließverbesserer zuzusetzen.

Als Fasern werden erfindungsgemäß insbesondere Naturfasern oder künstlich hergestellte Fasern oder eine Mischung aus beiden eingesetzt. Dabei sind die Naturfasern vorzugsweise faserförmige Minerale oder pflanzliche Fasern und die künstlich hergestellten Fasern vorzugsweise anorganische Synthesefasern oder organische Synthesefasern. Erfindungsgemäß bevorzugt sind Glas-, Carbon-, oder Polymerfasern, wiederum bevorzugt Glas- oder Carbonfasern.

Ganz besonders bevorzugt sind Glasfasern, insbesondere mit einem E-Modul von größer 50 GPa, bevorzugt größer 70 GPa, oder Carbonfasern, insbesondere mit einem E-Modul von größer 200 GPa, bevorzugt größer 230 GPa, einzusetzen. Insbesondere sind Carbonfasern mit diesen Eigenschaften bevorzugt. Solche Carbonfasern sind beispielsweise unter der Bezeichnung Pyrofil von der Firma Mitsubishi Rayon CO., LtD. im Handel erhältlich.

Der Volumengehalt der Fasern in den Bahnkörpern beträgt gemittelt über das Volumen des jeweiligen Bahnkörpers von 20 bis 80 Vol.-%, bevorzugt von 30 bis 70 Vol.-% besonders bevorzugt von 40 bis 60 Vol.-%, ganz besonders bevorzugt von 42 bis 55 Vol.-%.

Ein typisches imprägniertes Faserband hat in der Regel in Laufrichtung eine Länge von 100 bis zu 3000 m, eine Breite von 60 bis 2100 mm, bevorzugt von 500 bis 1000 mm, besonders bevorzugt von 600 bis 800 mm, und eine Dicke von 100 bis 350 µm, bevorzugt von 120 bis 200 µm. Jedoch kann auf der erfindungsgemäßen Vorrichtung auch ein anders dimensioniertes imprägniertes Faserband verarbeitet werden.

Sofern der als Matrix für das imprägnierte Faserband eingesetzte Thermoplast Polycarbonat ist, hat das imprägnierte Faserband beim Eintritt zwischen die Kühlwalzen eine Temperatur von 200 °C bis 400 °C, bevorzugt 250 °C bis 350 °C, besonders bevorzugt 280 °C bis 330 °C. Durch die Kühlwalzen wird das imprägnierte Faserband auf eine Temperatur von 90 °C bis 150 °C, bevorzugt 100 °C bis 120 °C heruntergekühlt. Durch ein weiteres Paar von Kühlwalzen, das erfindungsgemäß oder einfacher ausgestaltet sein kann, wird die Temperatur des imprägnierten Faserbands auf einen Wert von 50 °C bis 90 °C, bevorzugt 70 °C bis 80 °C erniedrigt.

Als Material für die Walzen ist beispielsweise Stahl, Grauguss, Messing oder Bonze geeignet, bevorzugt Stahl, insbesondere Stahl 1.1191. Die Walzen können Vollmaterial bestehen oder innen hohl sein. Als Material für die Dichtringe beispielsweise gehärteter Stahl, Grauguss, Messing oder Bonze geeignet, insbesondere Grauguss.

Das erfindungsgemäße Verfahren entspricht dem in der WO 2012 123 302 A1 beschriebenen Verfahren, insbesondere dem von Seite 1, Zeile 26, bis Seite 2, Zeile 22, beschriebenen Verfahren, wobei beim erfindungsgemäßen Verfahren die erfindungsgemäße Vorrichtung mit freilaufenden Kühlwalzen verwendet wird.

Weiterer Gegenstand der vorliegenden Erfindung ist auch ein imprägniertes Faserband, dass mit der erfindungsgemäßen Vorrichtung oder dem erfindungsgemäßen Verfahren hergestellt werden kann.

Das erfindungsgemäße imprägnierte Faserband zeichnet sich dadurch aus, dass in den Randbereichen die Dicke des imprägnierten Faserbands nicht oder nur geringfügig von der gewünschten Dicke des Querschnitts abweicht. Insbesondere weicht die Dicke nicht mehr als maximal 20 %, bevorzugt nicht mehr als maximal 10 %, besonders bevorzugt nicht mehr als maximal 5 %, besonders bevorzugt nicht mehr als maximal 2 % von der gewünschten Dicke des imprägnierten Faserbands ab. Dabei soll der Querschnitt des imprägnierten Faserbands nicht oder nur gering von dem gewünschten Querschnitt eines langgestreckten Rechtecks abweichen. Das bedeutet, dass die gewünschte Dicke des Faserbands über seine ganze Breite gleich sein soll.

Insbesondere zeichnet sich das erfindungsgemäße Faserband dadurch aus, dass in den Randbereichen die Dicke des imprägnierten Faserbands nicht oder nur geringfügig größer ist als die gewünschte Dicke des Querschnitts. Insbesondere ist die Dicke nicht mehr als maximal 20 %, bevorzugt nicht mehr als maximal 10 %, besonders bevorzugt nicht mehr als maximal 5 %, besonders bevorzugt nicht mehr als maximal 2 % größer ist als die gewünschte Dicke des imprägnierten Faserbands.

Mit dem erfindungsgemäßen Faserband ist dann möglich, einen Mehrschichtverbundwerkstoff bereit zu stellen, der eine ästhetisch ansprechende Oberfläche mit geringer Welligkeit mit gleichzeitig guten mechanischen Eigenschaften aufweist. So ein aus Faserbändern mit Polycarbonat als Matrixmaterial aufgebauter Mehrschichtverbundwerkstoff weist eine metallähnliche Haptik, Optik und Akustik auf. Der erfindungsgemäße Mehrschichtverbund kann beispielsweise aus dem erfindungsgemäßen Faserband durch Heißpressen oder Ultraschall von zwei oder mehr übereinander angeordneten Lagen des erfindungsgemäßen Faserbands hergestellt werden. Ein Verfahren zur Herstellung eines solchen Mehrschichtverbunds mittels Ultraschallschweißen ist beispielsweise in der PCT/EP2016/080870 beschrieben.

Weiterer Gegenstand der Erfindung ist daher auch ein aus dem erfindungsgemäßen Faserband hergestellter Mehrschichtverbund. Ein solcher erfindungsgemäßer Mehrschichtverbundwerkstoff ist als Gehäusematerial für Gehäuse für elektronische Geräte, insbesondere portable elektronische Geräte wie Laptops oder Smartphones, für die Außenbeplankung sowie für Interieurblenden von Automobilen geeignet, da ein solcher Mehrschichtverbundwerkstoff sowohl mechanische Last aufnehmen kann als auch ein hervorragendes äußeres Erscheinungsbild bietet.

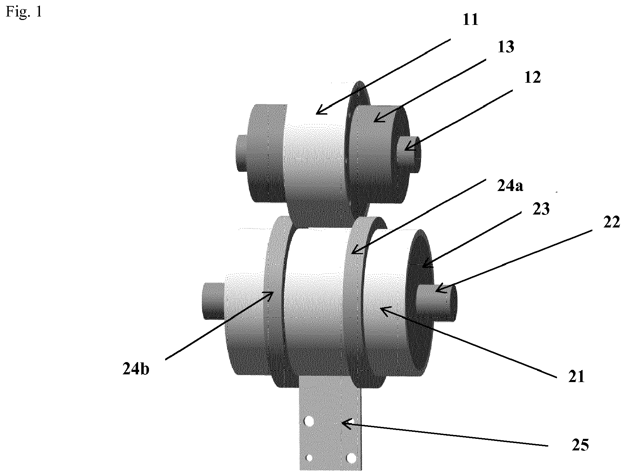

Fig. 1 zeigt in vereinfachter Form die erfindungsgemäße Vorrichtung mit einem Paar von übereinander angeordneten Kühlwalzen, ohne dass die Erfindung auf die dargestellte Ausführungsform eingeschränkt werden soll.

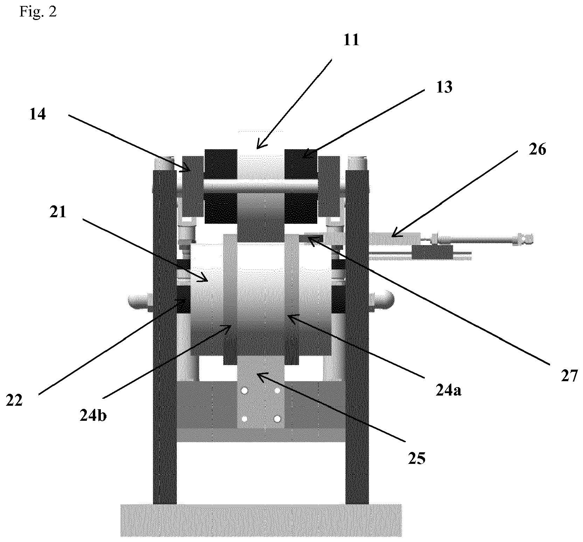

Fig. 2 zeigt in vereinfachter Form die erfindungsgemäße Vorrichtung mit einem Paar von übereinander angeordneten Kühlwalzen in einem Walzenlager, ohne dass die Erfindung auf die dargestellte Ausführungsform eingeschränkt werden soll.

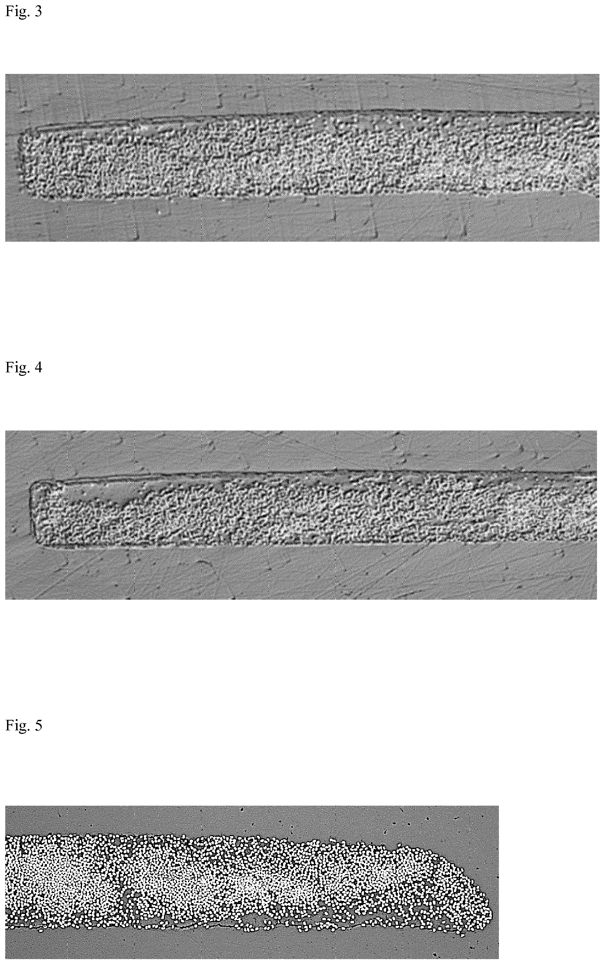

Fig. 3 zeigt einen etwa 4,1 mm breiten Ausschnitt aus dem Randbereich eines mit der erfindungsgemäßen Vorrichtung hergestellten erfindungsgemäßen imprägnierten Faserbands umfassend den Schnitt durch eine äußere Kante des imprägnierten Faserbands. Es ist deutlich zu erkennen, dass die Dicke des Faserbands an allen Stellen nahezu gleich ist, die Abweichungen also nur sehr gering sind. Dabei weicht der Querschnitt des imprägnierten Faserbands nur gering von dem gewünschten Querschnitt eines langgestreckten Rechtecks ab.
Fig. 4 zeigt einen etwa 4,3 mm breiten Ausschnitt aus dem Randbereich eines mit der erfindungsgemäßen Vorrichtung hergestellten imprägnierten erfindungsgemäßen Faserbands umfassend den Schnitt durch eine äußere Kante des imprägnierten Faserbands. Es ist deutlich zu erkennen, dass die Dicke des Faserbands an allen Stellen nahezu gleich ist, die Abweichungen also nur sehr gering sind. Dabei weicht der Querschnitt des imprägnierten Faserbands nur gering von dem gewünschten Querschnitt eines langgestreckten Rechtecks ab.
Fig. 5 zeigt einen etwa 1 mm breiten Ausschnitt aus dem Randbereich eines mit einer Vorrichtung aus dem Stand der Technik Vorrichtung hergestellten imprägnierten Faserbands umfassend den Schnitt durch eine äußere Kante des imprägnierten Faserbands. Die Vorrichtung weist keine Dichtringe auf. Es ist deutlich zu erkennen, dass die Dicke des Faserbands zum Randbereich immer geringer wird, also der Querschnitt des imprägnierten Faserbands dabei immer stärker von dem gewünschten Querschnitt eines langgestreckten Rechtecks abweicht. Deutlich zu erkennen ist auch die große Menge an eingeschlossener Luft (dunkle Bereiche innerhalb des Faserbands).

Dabei sind:
- 11: obere Walze
- 12: Achse der oberen Walze
- 13: Rolle, auf die die obere Walze angeordnet ist
- 14: Rückstellvorrichtung
- 21: untere Walze
- 22: Achse der unteren Walze
- 23: Rolle, auf die die untere Walze angeordnet ist
- 24a: erster Dichtring
- 24b: zweiter Dichtring
- 25: Abstandshalter
- 26: Abstandshaltevorrichtung
- 27: Rädchen der Abstandshaltevorrichtung

## Patentansprüche

1. Vorrichtung zur Herstellung eines mit Polymer imprägnierten Faserbands, wobei die Vorrichtung zwei achsparallele Walzen aufweist, zwischen den das Faserband durch einen Spalt hindurchlaufen kann, **dadurch gekennzeichnet, dass** diese Walzen weder unmittelbar noch mittelbar durch eine Antriebsvorrichtung angetrieben werden und die Walzen keine Kraft in Vorschubrichtung des imprägnierten Faserbands übertragen.

2. Vorrichtung nach Anspruch 1, **dadurch gekennzeichnet, dass** mindestens eine der Walzen in Richtung einer gedachten Achse, die rechtwinklig die Achsen beider Walzen schneidet, beweglich gelagert ist.

3. Vorrichtung nach Anspruch 1 oder 2, **dadurch gekennzeichnet, dass** die beweglich gelagerte Achse mit einer Rückstellvorrichtung versehen ist.

4. Vorrichtung nach einem der Ansprüche 1 bis 3, **dadurch gekennzeichnet, dass** mindestens eine der Walzen zwei Dichtringe aufweist, die koaxial zu der betreffenden Walze auf dieser angeordnet sind.

5. Vorrichtung nach einem der Ansprüche 1 bis 4, **dadurch gekennzeichnet, dass** jeder Dichtring je eine Abstandshaltevorrichtung oder Andrückvorrichtung aufweist.

6. Vorrichtung nach einem der Ansprüche 1 bis 5, **dadurch gekennzeichnet, dass** die zwei Dichtringe gleichartig sind.

7. Vorrichtung nach einem der Ansprüche 1 bis 6, **dadurch gekennzeichnet, dass** jeder der Dichtringe eine Fase aufweist.

8. Vorrichtung nach einem der Ansprüche 1 bis 7, **dadurch gekennzeichnet, dass** zwischen den Dichtringen ein Abstandshalter angeordnet ist.

9. Vorrichtung nach einem der Ansprüche 1 bis 8, **dadurch gekennzeichnet, dass** die Länge der längeren Walze die Länge der kürzeren Walze vollständig überlappt.

10. Vorrichtung nach einem der Ansprüche 1 bis 9, **dadurch gekennzeichnet, dass** die kürzere Walze mittig zur längeren Walz angeordnet ist.

11. Verfahren zur Herstellung zur eines mit Polymer imprägnierten Faserbands, **dadurch gekennzeichnet, dass** eine Vorrichtung nach einem der Ansprüche 1 bis 10 verwendet wird.

12. Imprägniertes Faserband, **dadurch gekennzeichnet, dass** die Dicke nicht mehr als maximal 20 %, bevorzugt nicht mehr als maximal 10 %, besonders bevorzugt nicht mehr als maximal 5 %, besonders bevorzugt nicht mehr als maximal 2 % von der gewünschten Dicke des imprägnierten Faserbands abweicht.

13. Imprägniertes Faserband, **dadurch gekennzeichnet, dass** die Dicke nicht mehr als maximal 20 %, bevorzugt nicht mehr als maximal 10 %, besonders bevorzugt nicht mehr als maximal 5 %, besonders bevorzugt nicht mehr als maximal 2 % größer ist als die gewünschte Dicke des imprägnierten Faserbands.

14. Mehrschichtverbund, hergestellt aus einem imprägnierten Faserband nach Anspruch 12 oder 13.

15. Verwendung eines Mehrschichtverbunds nach Anspruch 14 für die Außenbeplankung und für Interieurblenden von Automobilen sowie als Gehäusematerial für Gehäuse für elektronische Geräte, bevorzugt portable elektronische Geräte, besonders bevorzugt Laptops oder Smartphones.
